# FASCICULE DE BREVET EUROPEEN

(11) **EP 1 464 869 B1**
(45) Date de publication et mention de la délivrance du brevet: **12.07.2006**
(21) Numéro de dépôt: 04290814.5
(22) Date de dépôt: 26.03.2004
(51) Int. Cl.: F16H 1/28, F16H 57/08

(54) **Système de liaison souple entre un porte-satellites et le support fixe dans un réducteur de vitesse**
Flexible Verbindung zwischen dem Planetenträger und der festen Auflage eines Untersetzungsgetriebes
Flexible connection between the planet carrier and the fixed support of a speed reducer

(30) Priorité: 04.04.2003 FR 0304186
(43) Date de publication de la demande: 06.10.2004
(73) Titulaire: HISPANO-SUIZA, 92700 Colombes (FR)
(72) Inventeur: Becquerelle, Samuel, 78960 Voisins le Bretonneux (FR); Ville, Daniel, 92360 Meudon la Foret (FR); Libolt, Joel, 68800 Vieux-Thann (FR); Moog, Olivier, 68200 Mulhouse (FR); Pettinotti, Serge, 92400 Courbevoie (FR); Peiron, Benjamin, 31820 Pibrac (FR)
(74) Mandataire: Barbin le Bourhis, Joel

(56) Documents cités:
- FR-A- 1 379 451
- US-A- 5 391 125
- US-A- 5 466 198

## Description

L'invention se rapporte à un réducteur de vitesse, destiné notamment à assurer la transmission du couple entre une turbine à gaz et un compresseur dans une turbomachine.

Un réducteur est constitué principalement de quatre éléments : un planétaire entraîné par l'arbre de la turbine, une couronne dentée coaxiale au planétaire, des satellites engrenant avec le planétaire et la couronne et un porte-satellites.

La variation du rapport de réduction d'un tel ensemble, s'obtient par la modification du nombre de dents de chacun des pignons, et de l'architecture du réducteur.

Il existe deux types de configurations :
- les réducteurs planétaires dans lesquels le porte-satellites est fixe et la couronne est libre en rotation. La plage de fonctionnement optimisée de ce type de réducteur correspond à un rapport de réduction compris entre 1 et 3 ;
- les réducteurs épicycloïdaux dans lesquels la couronne est fixe et le porte-satellites est libre en rotation. La plage de fonctionnement optimisée de ce type de réducteur correspond à un rapport de réduction compris entre 3 et au-delà.

Dans le cas où le réducteur assure la transmission du couple entre la turbine à gaz et un compresseur dans une turbomachine, l'élément mobile du réducteur, soit la couronne, soit le porte-satellites, est relié à l'arbre d'entraînement du compresseur et l'autre élément est relié à la structure fixe de la turbomachine.

Le choix de la configuration du réducteur se fait donc par la détermination du rapport de réduction. L'inconvénient majeur de la configuration épicycloïdale est que malgré un encombrement plus faible que celui du réducteur planétaire, les satellites sont soumis à un champ centrifuge de l'ordre de 2 000 g, entraînant des difficultés importantes au niveau des paliers soutenant les satellites.

En isolant le satellite d'un réducteur, on constate que le palier qui soutient ce satellite est soumis à un effort radial équivalent à deux fois l'effort tangentiel généré par un engrènement. En outre, dans un réducteur épicycloïdal, des forces centrifuges importantes sont également présentes.

Comme le porte-satellites est en général relié à une structure fixe dans le cas d'un réducteur planétaire, ou à un arbre de transmission, dans le cas d'un réducteur à train épicycloïdal, par l'une de ses faces frontales, les paliers soutenant les satellites, et plus généralement le porte-satellites, sont soumis à des couples de torsion et vont se déformer, et transmettre des contraintes et déformations aux éléments auxquels le porte-satellites est fixé. Ces déformations entraînent également un désalignement des engrenages et une usure prématurée du réducteur.

Afin de minimiser les déformations, lors du fonctionnement, du porte-satellites dans un réducteur à train épicycloïdal, US 5,391,125, qui représente l'état de la technique le plus proche de l'invention, a proposé un réducteur de vitesse pour la transmission du couple entre une turbine à gaz et un compresseur dans une turbomachine d'aviation, qui comporte un planétaire coaxial à l'axe du réducteur et raccordé à la turbine, un porte-satellites raccordé au compresseur coaxialement au planétaire et sur lequel sont montés une pluralité de satellites engrenant avec le planétaire et une couronne dentée fixée sur une structure de la turbomachine et avec laquelle les satellites engrènent. Dans ce réducteur épicycloïdal, le porte-satellites comporte une cage annulaire ayant une pluralité de sièges pour supporter des paliers parallèlement à l'axe du réducteur et sur chacun desquels tourillonne l'un des satellites, et une pluralité de logements axiaux disposés chacun entre deux satellites adjacents, et, d'autre part, un porte-cage annulaire raccordé au compresseur et ayant une pluralité de bras axiaux, chaque bras étant disposé dans l'un des logements de la cage et étant fixé à une portion adjacente de la cage par une broche disposée dans le plan radial médian de la cage.

Chaque broche, disposée perpendiculairement à l'axe du réducteur, est insérée dans un trou ménagé dans le bras correspondant et deux trous ménagés radialement de part et d'autre du bras dans une paroi axiale de la cage avec interposition de coussinets. Cette liaison de type encastrement n'autorise aucun dévers ou déplacement axial entre la cage et le porte-cage, qui peuvent se produire dans une turbomachine, notamment d'aviation, par suite des vibrations dues aux turbulences de l'air ambiant et des dilatations thermiques.

Le réducteur selon l'invention se différencie de cet état de la technique par le fait que les logements de bras sont disposés radialement à l'intersection des efforts des satellites adjacents, et par le fait que chaque broche de fixation d'un bras sur la portion adjacente de la cage est rigidement fixée sur l'une des pièces constituées par ledit bras et ladite portion de cage et est montée sur l'autre pièce par une liaison flexible comportant un manchon entourant la broche et disposé dans un orifice de l'autre pièce, ledit manchon comportant deux flasques annulaires d'extrémité et plusieurs douilles coaxiales disposées entre lesdits flasques, l'une au moins desdites douilles étant réalisée en un élastomère pour procurer la flexibilité.

Cette disposition permet d'induire de la souplesse dans les liaisons planétaires/satellites et satellites/couronne. Ceci a l'avantage, non négligeable, de diminuer le désalignement dans les contacts de dentures.

Cette douille en élastomère assure si besoin est le déversement de la cage par rapport au porte-cage raccordé au premier élément.

De préférence, les flasques annulaires d'extrémité du manchon présentent chacun en vis-à-vis une feuillure radialement interne et une feuillure radialement externe, lesdites feuillures étant séparées par une nervure annulaire, et les douilles comportent une bague interne rigide dont les extrémités logent dans les feuillures radialement internes des flasques, une bague externe rigide qui s'étend entre les feuillures radialement externes des flasques et qui présente à ses extrémités des rainures radialement internes en regard des feuillures radialement externes des flasques, et la douille en élastomère est interposée entre la bague interne et la bague externe et s'étend entre les nervures des flasques.

Les chambres annulaires délimitées par les feuillures radialement externes des flasques et les rainures radialement internes de la bague externe renferment des joints élastiques.

Chacune des chambres annulaires renferme en outre une bague anti-extrusion destinée à empêcher l'extrusion de l'élastomère, ladite bague anti-extrusion étant interposée entre un joint élastique et la face frontale de la rainure radialement interne de la bague externe.

Pour immobiliser le manchon sur la broche, l'un des flasques du manchon est en appui contre la pièce sur laquelle la broche est fixée, et l'autre flasque est appuyé contre la bague interne par un écrou coopérant avec un filetage de la broche.

Selon un premier mode de réalisation, la broche est rigidement liée au bras correspondant et est disposée perpendiculairement à l'axe du réducteur.

Selon un deuxième mode de réalisation, la broche est formée à l'extrémité du bras et est parallèle à l'axe du réducteur.

D'autres avantages et caractéristiques de l'invention ressortiront à la lecture de la description suivante faite à titre d'exemple et en référence aux dessins annexés, dans lesquels :
- la figure 1 est une vue axiale d'un réducteur qui montre les efforts tangentiels générés par les engrènements des satellites et leur résultante sur les paliers des satellites ;
- la figure 2 est une vue en perspective d'un demi-réducteur selon l'invention coupé selon un plan passant par son axe ;

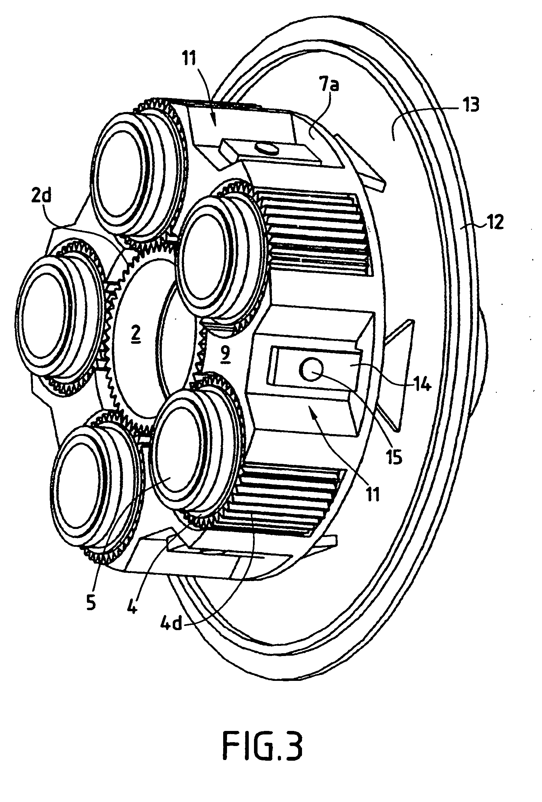

- la figure 3 est une vue en perspective, sans la couronne et sans le flasque latéral servant de butée axiale aux paliers de satellites, d'un réducteur selon l'invention ;

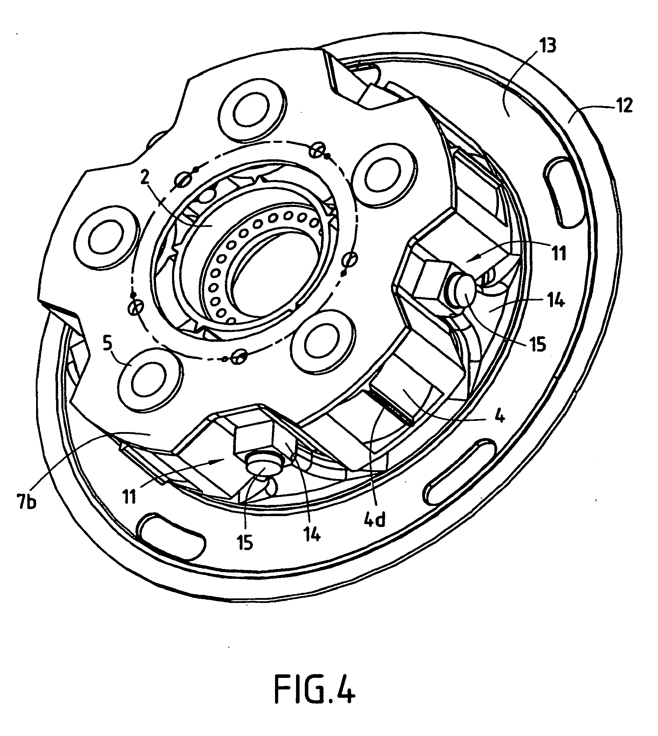

- la figure 4 est une vue en perspective du porte-satellites selon l'invention ;
- la figure 5 est une vue en perspective du porte-cage seul ;
- la figure 6 est une coupe de la liaison d'un bras et de la cage ;
- la figure 7 est une coupe du manchon montré sur la figure 6 ;
- la figure 8 est une vue éclatée d'un mode de réalisation préféré du manchon selon une coupe par un plan contenant l'axe du manchon ;
- la figure 9 est une coupe du manchon de la figure 8 ;
- la figure 10 est une vue en perspective d'une variante de réalisation de la liaison entre la cage et le porte cage ; et
- la figure 11 est une coupe de la liaison montrée sur la figure 10.

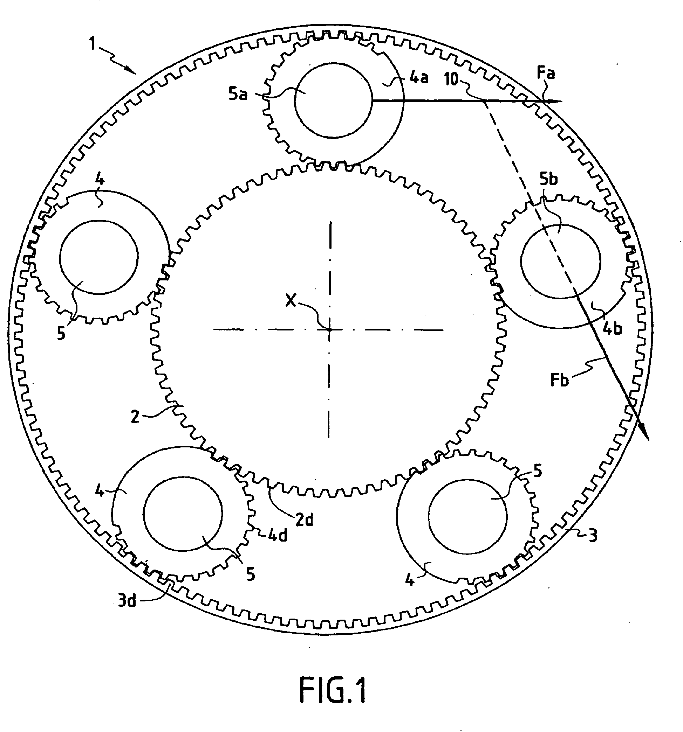

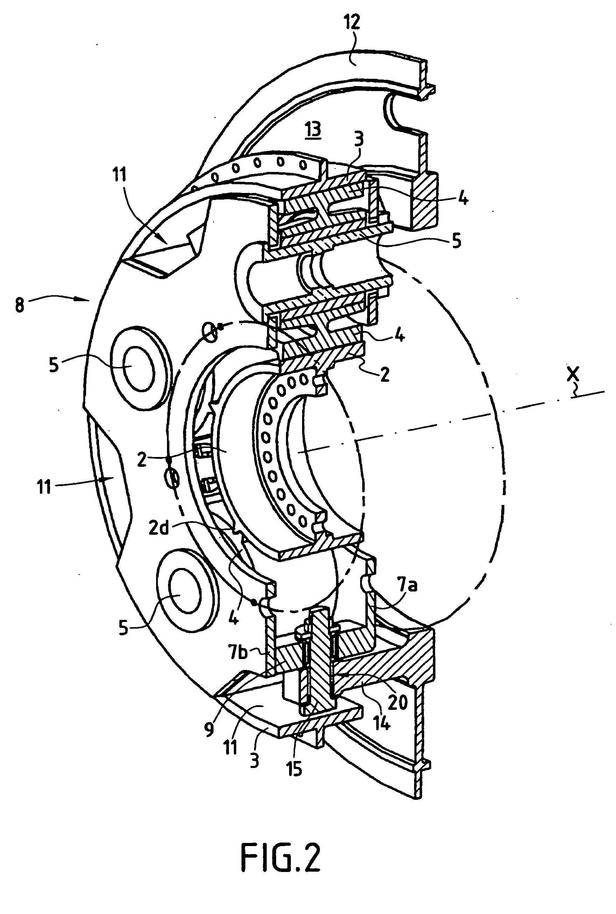

Les figures 1 et 2 montrent un réducteur 1 d'axe X, qui comporte un planétaire 2 d'axe X présentant sur sa périphérie une denture 2d, une couronne 3 d'axe X, ayant un diamètre supérieur au diamètre du planétaire 2 et présentant sur sa paroi radialement intérieure une denture 3d, et entre le planétaire 2 et la couronne 3, une pluralité de satellites 4, au nombre de 5 sur la figure 1, présentant sur leur périphérie une denture 4d engrenant avec les dentures 2d et 3d du planétaire 2 et de la couronne 3. Les satellites 4 sont montés tourillonnant sur des paliers 5 parallèles à l'axe X dont les extrémités sont montées dans des paires de sièges prévues en vis-à-vis dans deux flasques latéraux 7a et 7b d'une cage 8 supportant les satellites 5, les deux flasques latéraux 7a et 7b étant rigidement reliés par des pontets 9 disposés entre deux satellites voisins.

De préférence, les pontets 9 et l'un des flasques latéraux 7a sont réalisés en une seule pièce, constituant le carter de support aux paliers 5 des satellites 4, et l'autre flasque latéral 7b se présente sous la forme d'une chape servant de butée axiale à l'ensemble des paliers 5 des satellites 4. Les paliers 5, au nombre de cinq sur les dessins, sont régulièrement espacés autour de l'axe X du réducteur 1 et sont disposés à mi-distance des dentures 2d et 3d.

Qu'il s'agisse d'un réducteur planétaire, dans lequel la cage 8 est fixe en rotation autour de l'axe X et la couronne 3 est mobile en rotation, ou d'un réducteur à train épicycloïdal dans lequel, la couronne 3 est fixée à une structure fixe et la cage 8 est mobile en rotation autour de l'axe X, chaque palier 5 est soumis à un effort perpendiculaire au plan contenant l'axe X et l'axe dudit palier et dont l'intensité est équivalente à deux fois l'effort tangentiel généré par un engrènement.

Sur la figure 1, on a représenté par la flèche Fa l'effort supporté par le palier 5a du satellite 4a et par la flèche Fb l'effort supporté par le palier 5b du satellite 4b voisin du satellite 4a. Ces deux forces Fa et Fb se coupent en un point 10 situé à l'intérieur du diamètre de la couronne 3, et dans le plan radial médian de la cage 8.

Selon la présente invention, les pontets 9 et au moins l'un des flasques latéraux 7a et 7b, présentent des logements axiaux 11 renfermant chacun un point 10 intersection des lignes des efforts Fa et Fb de deux satellites 4a, 4b adjacents.

La référence 12 désigne un porte-cage annulaire, visible sur la figure 2, d'axe X, qui comporte sur sa face frontale 13 une pluralité de bras 14, au nombre de cinq dans l'exemple montré sur les dessins, parallèles à l'axe X et logeant chacun dans un logement axial 11.

Chaque bras 14 est fixé au pontet 9 adjacent par une broche 15 dont l'axe géométrique est perpendiculaire à l'axe X du réducteur 1 et coupe ce dernier. La broche 15 est rigidement fixée sur le bras 14 et est liée au pontet adjacent 9 par une liaison sphérique de type à doigt qui immobilise radialement le porte-cage 12, mais permet dans une certaine mesure, un dévers du porte-cage 12 ou un léger déplacement axial de ce dernier par rapport à la cage 8, afin d'induire de la souplesse dans les liaisons entre le planétaire 2 et les satellites 4 et entre les satellites 4 et la couronne 3. Ceci a l'avantage, non négligeable, de diminuer le désalignement dans le contact des dentures 2d, 4d et 3d.

Les axes géométriques des broches 15 sont situés dans le plan radial médian des satellites 4 et passent par les points d'intersection 10 des forces Fa et Fb de deux paliers 5a, 5b adjacents.

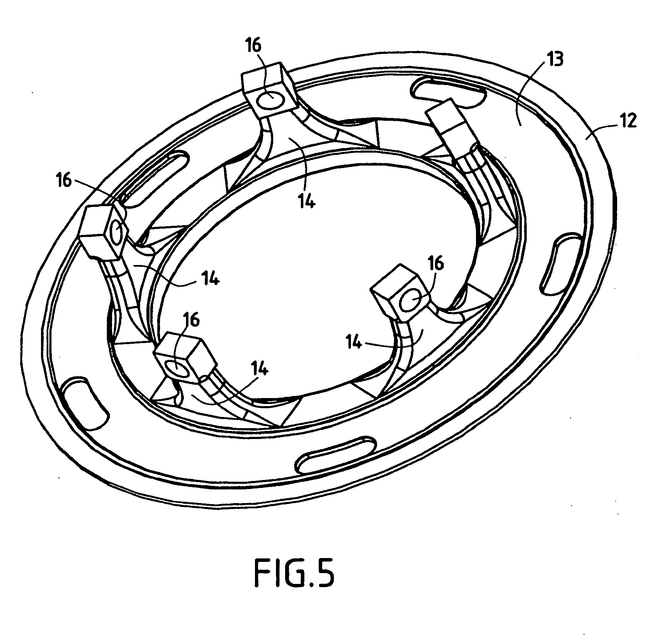

La figure 5 montre en perspective le porte-cage 12 seul. On voit sur cette figure que les bras 14 ont une section sensiblement rectangulaire et comporte chacun à leur extrémité un trou radial 16 pour recevoir la partie radialement externe de la broche 15.

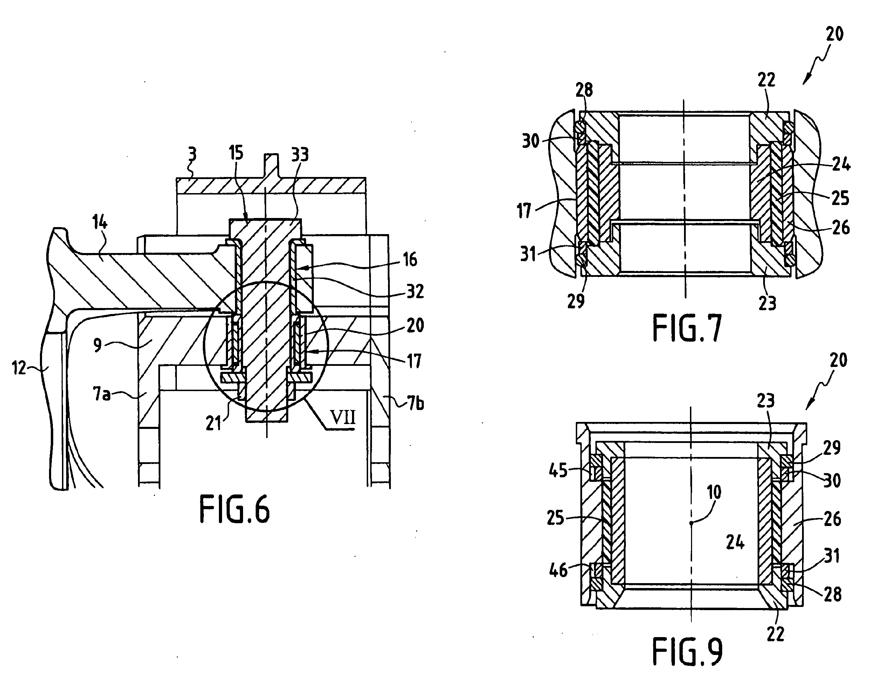

En regard du trou radial 16, le pontet correspondant 9 comporte un orifice radial 17 dans lequel est disposé un manchon 20 entourant la partie radialement interne de la broche 15, ainsi que cela est montré sur la figure 6, ce manchon 20 étant retenu sur la broche 15 par un écrou 21 qui coopère avec un filetage prévu sur l'extrémité radialement interne de la broche 15.

Le manchon 20 montré en détail sur la figure 7 comporte deux flasques annulaires d'extrémité, référencés 22 et 23, au moins trois douilles coaxiales, 24, 25 et 26, interposées entre les flasques annulaires 22 et 23, la douille intermédiaire 25 étant réalisée en un matériau élastomère. La douille radialement interne 24, ainsi que les flasques annulaires 22 et 23 ont un diamètre intérieur égal au diamètre extérieur de la broche 15 et les extrémités de la douille interne 24 sont disposées dans des feuillures ménagées en vis-à-vis dans les flasques annulaires 22 et 23. La douille en élastomère 25 est disposée entre la douille interne 24 et la douille externe 26 et entre les flasques annulaires d'extrémité 22 et 23. La douille radialement externe 26 a un diamètre externe égal au diamètre de l'orifice 17 du pontet 9. Cette douille externe 26 est frettée dans l'orifice 17, et elle emprisonne la douille en élastomère 25. Des joints élastiques 28 et 29 sont interposés entre les flasques annulaires 22 et 23, et la paroi radialement interne de l'orifice 17 ou des extrémités de la douille radialement externe 26, afin de permettre un dévers ou un déplacement latéral de la douille externe 26 par rapport à la douille interne 24, par déformation de la douille en élastomère 25.

Des bagues anti-extrusion, référencées 30 et 31 sont interposées entre les joints élastiques 28 et 29 et une surface frontale de la douille externe 26.

Les douilles interne 24 et externe 26 sont réalisées sous la forme de bagues métalliques rigides. Les bagues anti-extrusion 30 et 31 permettent de maintenir la matière constitutive de la douille en élastomère 25 dans l'espace annulaire qui est prévu pour cette dernière.

La partie radialement externe de la broche 15 est frettée dans le trou 16 du bras 14 avec interposition d'un coussinet 32, montré sur la figure 6. Cette partie radialement externe comporte une tête élargie 33. Lorsqu'on serre l'écrou 21 contre le flasque annulaire 23, ce dernier appuie la douille interne 24 contre le flasque annulaire 22, qui vient à son tour appuyer contre la face radialement interne, par rapport à l'axe X, du bras 14. Le manchon 20 est ainsi maintenu dans une position fixe radialement par rapport à l'axe X du réducteur 1.

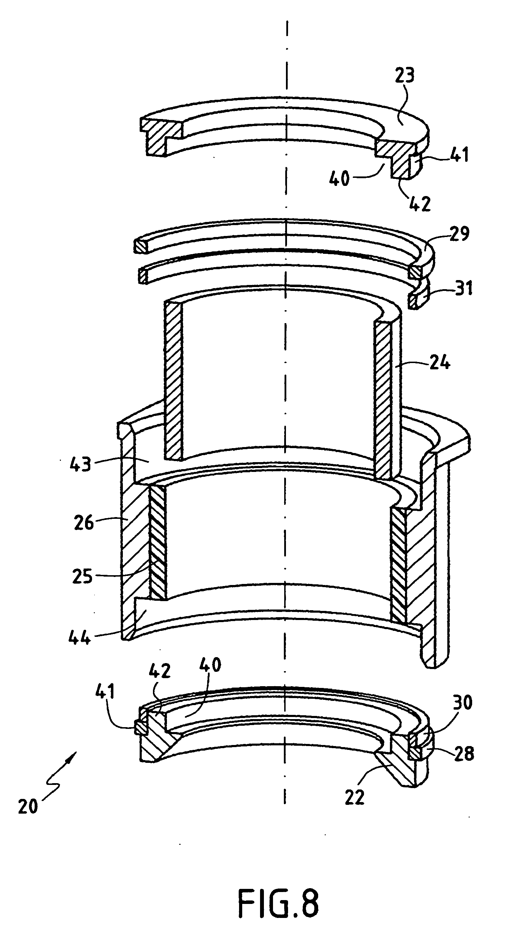

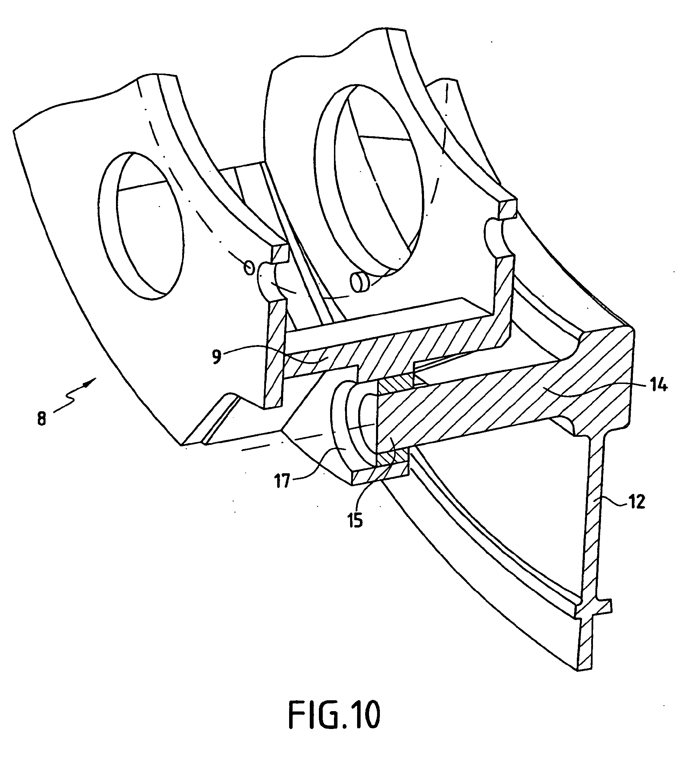

Les figures 8 et 9 montrent un mode de réalisation préféré du manchon 20, qui diffère du manchon 20 montré sur la figure 7 par le fait que les flasques annulaires 22 et 23 d'extrémité présentent, chacun en vis-à-vis, une feuillure radialement interne 40 et une feuillure radialement externe 41, séparées par une nervure annulaire 42.

Le diamètre externe de la feuillure radialement interne 40 est égal au diamètre externe de la douille ou bague interne 24. Les extrémités de la bague interne 24 sont disposées après montage dans les feuillures radialement internes 40.

La douille en élastomère 25 dont la hauteur est inférieure à la hauteur de la bague interne est disposée entre les nervures annulaires 42 des flasques annulaires 22 et 23.

La douille ou bague externe 26, dont la hauteur est supérieure à la hauteur de la bague interne 24, présente à ses extrémités des rainures radialement internes, référencées 43 et 44, séparées par une hauteur de bague sensiblement égale à la hauteur de la douille en élastomère 25.

Les rainures radialement internes 43 et 44 de la bague externe sont disposées après montage en regard des feuillures radialement externes 41 des flasques annulaires d'extrémité 22 et 23 et délimitent avec ces dernières des chambres annulaires référencées 45 et 46, visibles sur la figure 9, qui logent chacune un joint d'étanchéité 28, 29 et une bague anti-extrusion 30, 31.

Les diamètres des rainures radialement internes 43 et 44 sont légèrement supérieurs au diamètre externe des flasques annulaires 22 et 23, et les extrémités de la bague externe 26 entourent avec jeu les flasques annulaires 22 et 23, afin de permettre une déformation de la douille en élastomère 25 et un désalignement entre les bagues interne 24 et externe 26.

Le point 10 intersection des forces supportées par les paliers 5a, 5b de deux satellites voisins 4a et 4b est situé de préférence dans la zone centrale du manchon 20. L'effort supporté par la broche 15 et le manchon 20 est ainsi un effort radial perpendiculaire à l'axe de la broche 15, qui n'entraîne pas de couple de torsion au niveau de la liaison sphérique à doigt. La bague interne 24 est frettée sur la broche 15 et la bague externe 26 est frettée sur le pontet 9.

Dans l'exemple décrit en détail ci-dessus, la broche 15 est frettée sur le bras 14, et la liaison sphérique à doigt est disposée entre la broche 15 et le pontet 9. Il est évident pour l'homme du métier que la broche 15 pourrait être frettée sur le pontet 9, et que la liaison sphérique à doigt serait alors disposée entre la broche 15 et le bras 14.

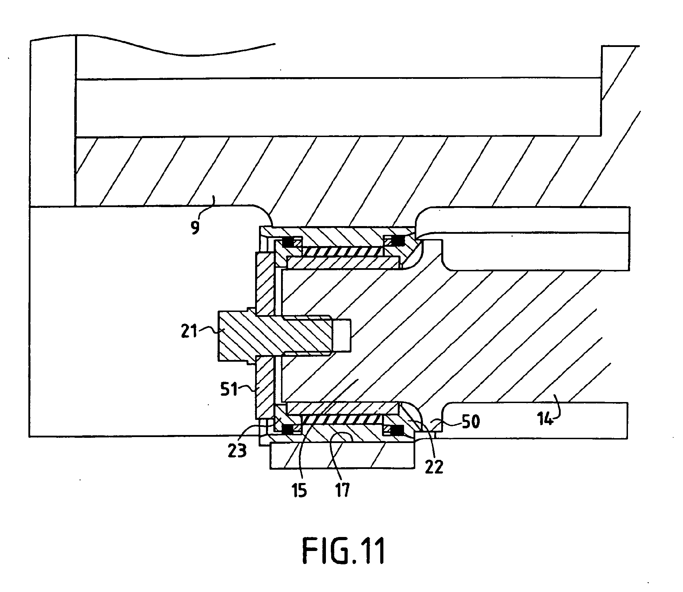

Les figures 10 et 11 montrent une variante de réalisation de l'invention qui diffère de celle décrite ci-dessus par le fait que la broche 15 est formée à l'extrémité du bras 14 et est parallèle à l'axe X du réducteur 1. Le pontet correspondant 9 comporte un orifice 17 disposé dans le plan médian de la cage 8, et dans lequel est disposé un manchon 20 conforme à celui décrit ci-dessus en référence à la figure 9. Le manchon 20 entoure la broche 15 et le flasque annulaire 22 est en appui contre un épaulement annulaire 50 formé sur le bras 14. Le manchon 20 est retenu sur la broche 15 par un écrou 21 en appui sur une rondelle 51, elle-même en appui sur le flasque annulaire 23.

Cette solution présente l'avantage de bénéficier d'un encombrement réduit et présente un coût de réalisation plus réduit. En effet, le manchon 20 est introduit parallèlement à l'axe X et en bout de la broche 15.

Le réducteur 1 décrit ci-dessus trouve une application particulière dans l'entraînement d'un compresseur par une turbine dans une turbomachine d'aviation. Dans ce cas, le planétaire 2 est relié à l'arbre de la turbine.

Le porte-cage 12 est alors relié à la structure fixe de la turbomachine et la couronne 3 est reliée à l'arbre d'entraînement du compresseur, dans le cas d'un réducteur planétaire.

Le porte-cage 12 est en revanche relié à l'arbre d'entraînement du compresseur dans le cas d'un réducteur à train épicycloïdal, la couronne 3 étant alors reliée à la structure fixe de la turbomachine.

## Revendications

1. Réducteur de vitesse, ledit réducteur comportant un planétaire (2) coaxial à l'axe dudit réducteur, un porte-satellites sur lequel sont montés une pluralité de satellites (4) engrenant avec ledit planétaire (2) et une couronne (3) dentée avec laquelle lesdits satellites engrènent, ledit porte-satellites comportant, d'une part, une cage annulaire (8) ayant une pluralité de paires de sièges pour supporter des paliers (5) parallèlement à l'axe dudit réducteur et sur chacun desquels tourillonne l'un desdits satellites (4), et une pluralité de logements axiaux (11) disposés chacun entre deux satellites adjacents (4a, 4b), et, d'autre part, un porte-cage annulaire (12) ayant une pluralité de bras axiaux (14), chaque bras (14) étant disposé dans l'un desdits logements (11), et étant fixé à une portion adjacente (9) de ladite cage (8) par une broche (15) disposée sensiblement dans le plan radial médian de ladite cage,
**caractérisé par le fait que** les logements (11) des bras (14) sont disposés radialement à l'intersection des lignes des efforts des satellites adjacents (4a, 4b), et **par le fait que** chaque broche (15) de fixation d'un bras (14) sur la portion adjacente (9) de la cage (8) est rigidement fixée sur l'une des pièces constituées par ledit bras (14) et ladite portion de cage (9) et est montée sur l'autre pièce par une liaison flexible comportant un manchon (20) entourant la broche (15) et disposé dans un orifice (17) de l'autre pièce, ledit manchon (20) comportant deux flasques annulaires (22, 23) d'extrémité et plusieurs douilles coaxiales (24, 25, 26) disposées entre lesdits flasques, l'une au moins desdites douilles (25) étant réalisée en un élastomère pour procurer la flexibilité.

2. Réducteur selon la revendication 1, **caractérisé par le fait que** les flasques annulaires d'extrémité (22, 23) du manchon (20) présentent chacun en vis-à-vis une feuillure radialement interne (40) et une feuillure radialement externe (41), lesdites feuillures étant séparées par une nervure annulaire (42), et **par le fait que** les douilles comportent une bague interne (24) rigide dont les extrémités logent dans les feuillures radialement internes (40) des flasques (22, 23), une bague externe (26) rigide qui s'étend entre les feuillures radialement (41) externes des flasques (22, 23) et qui présente à ses extrémités des rainures radialement internes (43, 44) en regard des feuillures radialement externes (41) des flasques (22, 23), et la douille en élastomère (25) est interposée entre la bague interne (24) et la bague externe (26) et s'étend entre les nervures (42) des flasques.

3. Réducteur selon la revendication 2, **caractérisé par le fait que** des chambres annulaires (45, 46) sont délimitées par les feuillures radialement externes (41) des flasques et les rainures radialement internes (43, 44) de la bague externe (26), lesdites chambres renfermant des joints élastiques (28, 29).

4. Réducteur selon la revendication 3, **caractérisé par le fait que** chacune des chambres annulaires (45, 46) renferme en outre une bague anti-extrusion (30, 31) destinée à empêcher l'extrusion de l'élastomère, ladite bague anti-extrusion (30, 31) étant interposée entre un joint élastique (28, 29) et la face frontale de la rainure radialement interne (43, 44) de la bague externe (26).

5. Réducteur selon l'une des revendications 2 à 4, **caractérisé par le fait que** l'un des flasques (22) du manchon (20) est en appui contre la pièce sur laquelle la broche (15) est fixée et l'autre flasque (23) est appuyé contre la bague interne (24) par un écrou (21) coopérant avec un filetage de la broche (15).

6. Réducteur selon l'une des revendications 1 à 5, **caractérisé par le fait que** la broche (15) est rigidement liée au bras (14) correspondant et disposée perpendiculairement à l'axe du réducteur.

7. Réducteur selon l'une quelconque des revendications 1 à 5, **caractérisé par le fait que** la broche (15) est formée à l'extrémité du bras (14) et est parallèle à l'axe du réducteur.

8. Turbomachine comportant un compresseur, une turbine à gaz et un réducteur de vitesse pour la transmission entre ladite turbine à gaz et ledit compresseur, ledit réducteur comportant un planétaire (2) coaxial à l'axe dudit réducteur et raccordé à ladite turbine, un porte-satellites raccordé à un premier élément de ladite turbomachine coaxialement audit planétaire (2) et sur lequel sont montés une pluralité de satellites (4) engrenant avec ledit planétaire (2) et une couronne (3) dentée fixée sur un deuxième élément de ladite turbomachine et avec laquelle lesdits satellites engrènent, l'un desdits premier et deuxième éléments étant une structure fixe de ladite turbomachine et l'autre desdits éléments entraînant en rotation ledit compresseur, ledit porte-satellites comportant, d'une part, une cage annulaire (8) ayant une pluralité de paires de sièges pour supporter des paliers (5) parallèlement à l'axe dudit réducteur et sur chacun desquels tourillonne l'un desdits satellites (4), et une pluralité de logements axiaux (11) disposés chacun entre deux satellites adjacents (4a, 4b), et, d'autre part, un porte-cage annulaire (12) raccordé audit premier élément et ayant une pluralité de bras axiaux (14), chaque bras (14) étant disposé dans l'un desdits logements (11), et étant fixé à une portion adjacente (9) de ladite cage (8) par une broche (15) disposée sensiblement dans le plan radial médian de ladite cage,
**caractérisé par le fait que** les logements (11) des bras (14) sont disposés radialement à l'intersection des lignes des efforts des satellites adjacents (4a, 4b), et **par le fait que** chaque broche (15) de fixation d'un bras (14) sur la portion adjacente (9) de la cage (8) est rigidement fixée sur l'une des pièces constituées par ledit bras (14) et ladite portion de cage (9) et est montée sur l'autre pièce par une liaison flexible comportant un manchon (20) entourant la broche (15) et disposé dans un orifice (17) de l'autre pièce, ledit manchon (20) comportant deux flasques annulaires (22, 23) d'extrémité et plusieurs douilles coaxiales (24, 25, 26) disposées entre lesdits flasques, l'une au moins desdites douilles (25) étant réalisée en un élastomère pour procurer la flexibilité.

9. Turbomachine selon la revendication 8, **caractérisé par le fait que** la couronne (3) est fixée sur la structure fixe de la turbomachine, et le porte-cage (12) entraîne le compresseur en rotation.

## Claims

1. A speed reduction gear train, said reduction gear train comprising a sun gear (2) coaxial with the axis of said reduction gear train, a planet carrier on which there are mounted a plurality of planet gears (4) meshing with said sun gear (2), and an annular gear (3) with which said planet gears mesh, said planet carrier comprising firstly an annular cage (8) having a plurality of pairs of seats for supporting bearings (5) parallel to the axis of said reduction gear train and each having one of said planet gears (4) turning thereon, and a plurality of axial housings (11), each disposed between two adjacent planet gears (4a, 4b), and secondly an annular cage carrier (12) having a plurality of axial arms (14), each arm (14) being disposed in one of said housings (11) and being fixed to an adjacent portion (9) of said cage (8) by a pin (15) disposed substantially in the radial midplane of said cage,
the reduction gear train being **characterised by** the fact that the housings (11) of the arms (14) are disposed radially at the intersections between the lines of the forces to which adjacent planet gears (4a, 4b) are subjected, and by the fact that each pin (15) for fixing an arm (14) to the adjacent portion (9) of the cage (8) is rigidly secured to one of the parts constituted by said arm (14) and said cage portion (9), and is mounted to the other one of said parts by a flexible connection comprising a sleeve (20) surrounding the pin (15) and disposed in an orifice (17) of the other part, said sleeve (20) comprising two axial end plates (22, 23) and a plurality of coaxial bushings (24, 25, 26) disposed between said end plates, at least one of said bushings (25) being made of an elastomer so as to provide the flexibility.

2. A reduction gear train according to claim 1, **characterised by** the fact that the end annular plates (22, 23) of the sleeve (20) present respective facing radially-inner and radially-outer rabbets (40, 41), said rabbets themselves being separated by a respective annular rib (42), and by the fact that the bushings comprise a rigid inner ring (24) whose ends are received in the radially-inner rabbets (40) of the plates (22, 23), a rigid outer ring (26) which extends between the radially outer rabbets (41) of the plates (22, 23), and which presents, at its ends, radially-inner grooves (43, 44) facing the radially-outer rabbets (41) of the plates (22, 23), and the elastomer bushing (25) is interposed between the inner ring (24) and the outer ring (26) and extends between the ribs (42) of the plates.

3. A reduction gear train according to claim 2, **characterised by** the fact that annular chambers (45, 46) are defined by the radially-outer rabbets (41) of the plates and the radially-inner grooves (43, 44) of the outer ring (26), said chambers containing resilient gaskets (28, 29).

4. A reduction gear train according to claim 3, **characterised by** the fact that each of said annular chambers (45, 46) further contains an anti-extrusion ring (30, 31) for preventing the elastomer from being extruded, each of said anti-extrusion rings (30, 31) being interposed between a resilient gasket (28, 29) and the front face of the radially-inner groove (43, 44) of the outer ring (26).

5. A reduction gear train according to one of claims 2 to 4, **characterised by** the fact that one of the plates (22) of the sleeve (20) presses against the part to which the pin (15) is fixed, and the other plate (23) is pressed against the inner ring (24) by a nut (21) co-operating with a thread on the pin (15).

6. A reduction gear train according to one of claims 1 to 5, **characterised by** the fact that the pin (15) is rigidly connected to the arm (14) and is disposed perpendicularly to the axis of the reduction gear train.

7. A reduction gear train according to any one of claims 1 to 5, **characterised by** the fact that the pin (15) is formed at the end of the arm (14) and is parallel to the axis of the reduction gear train.

8. A turbomachine including a compressor, a gas turbine and a speed reduction gear train for transmission between said gas turbine and said compressor, said reduction gear train comprising a sun gear (2) coaxial with the axis of said reduction gear train and connected to said turbine, a planet carrier connected to a first element of said turbomachine coaxially with said sun gear (2) and on which there are mounted a plurality of planet gears (4) meshing with said sun gear (2), and an annular gear (3) fixed to a second element of said turbomachine and with which said planet gears mesh, one of said first and second elements being a fixed structure of said turbomachine and the other of said elements driving said compressor in rotation, said planet carriers comprising firstly an annular cage (8) having a plurality of pairs of seats for supporting bearings (5) parallel to the axis of said reduction gear train and each having one of said planet gears (4) turning thereon, and a plurality of axial housings (11), each disposed between two adjacent planet gears (4a, 4b), and secondly an annular cage carrier (12) connected to said first element and having a plurality of axial arms (14), each arm (14) being disposed in one of said housings (11) and being fixed to an adjacent portion (9) of said cage (8) by a pin (15) disposed substantially in the radial midplane of said cage,
the reduction gear train being **characterised by** the fact that the housings (11) of the arms (14) are disposed radially at the intersections between the lines of the forces to which adjacent planet gears (4a, 4b) are subjected, and by the fact that each pin (15) for fixing an arm (14) to the adjacent portion (9) of the cage (8) is rigidly secured to one of the parts constituted by said arm (14) and said cage portion (9), and is mounted to the other one of said parts by a flexible connection comprising a sleeve (20) surrounding the pin (15) and disposed in an orifice (17) of the other part, said sleeve (20) comprising two axial end plates (22, 23) and a plurality of coaxial bushings (24, 25, 26) disposed between said end plates, at least one of said bushings (25) being made of an elastomer so as to provide the flexibility.

9. A turbomachine according to claim 8, **characterised by** the fact that the annular gear (3) is fixed to the fixed structure of the turbomachine, and the cage carrier (12) drives the compressor in rotation.

## Patentansprüche

1. Untersetzungsgetriebe mit einem Zentralrad (2), das koaxial zur Achse dieses Untersetzungsgetriebes angeordnet ist, einem Planetenträger, an dem ein Vielzahl von Planetenrädern (4) sitzen, die sich mit diesem Zentralrad (2) in Eingriff befinden, und mit einem Zahnkranz (3), mit dem sich diese Planetenräder in Zahneingriff befinden, wobei dieser Planetenträger einerseits einen ringförmigen Käfig (8) mit einer Vielzahl von paarweise angeordneten Sitzen, um Lager (5) parallel zur Achse dieses Untersetzungsgetriebes zu halten, auf denen jeweils eines dieser Planetenräder (4) dreht, sowie eine Vielzahl von axialen Aufnahmen (11), die jeweils zwischen zwei aneinandergrenzenden Planetenrädern (4a, 4b) angeordnet sind, und andererseits einen ringförmigen Käfigträger (12) mit einer Vielzahl von axialen Armen (14) umfasst, wobei jeder Arm (14) in einer dieser Aufnahmen (11) angeordnet ist und an einem angrenzenden Abschnitt (9) dieses Käfigs (8) mittels eines Stifts (15) befestigt ist, der im Wesentlichen in der radialen Mittelebene dieses Käfigs angeordnet ist,
**dadurch gekennzeichnet,**
**dass** die Aufnahmen (11) der Arme (14) radial am Schnittpunkt der Kraftlinien der aneinandergrenzenden Planetenräder (4a, 4b) angeordnet sind, und dass jeder Stift (15) zur Befestigung eines Arms (14) an dem angrenzenden Abschnitt (9) des Käfigs (8) starr an einem der von diesem Arm (14) und diesem Käfigabschnitt (9) gebildeten Teile befestigt ist und an dem anderen Teil durch eine flexible Verbindung angebracht ist, welche eine Muffe (20) umfasst, die den Stift (15) umgibt und in einer Öffnung (17) des anderen Teils angeordnet ist, wobei diese Muffe (20) zwei ringförmige Endflansche (22, 23) und mehrere zwischen diesen Flanschen angeordnete koaxiaic Hülsen (24, 25, 26) enthält, wobei mindestens eine dieser Hülsen (25) aus einem hergestellt ist, um die Flexibilität zu gewährleisten.

2. Untersetzungsgetriebe nach Anspruch 1,
**dadurch gekennzeichnet,**
**dass** die ringförmigen Endflansche (22, 23) der Muffe (20) jeweils einen, radial inneren Falz (40) und einen radial äußeren Falz (41) aurweisen, wobei diese Falze durch eine ringförmige Rippe (42) voneinander getrennt sind, und dass die Hülsen einen starren Innenring (24), dessen Enden in den radial inneren Falzen (40) der Flansche (22, 23) Aufnahme finden, und einen starren Außenring (26) umfassen, der sich zwischen den radial äußeren Falzen (41) der Flansche (22, 23) erstreckt und an seinen Enden radial innere Rillen (43, 44) aufweist, die den radial äußeren Falzen (41) der Flansche (22, 23) gegenüber liegen, und die Elastomerhülse (25) zwischen dem Innenring (24) und dem Außenring (26) angeordnet ist und sich zwischen den Rippen (42) der Flansche erstreckt.

3. Untersetzungsgetriebe nach Anspruch 2,
**dadurch gekennzeichnet,**
**dass** von den radial äußeren Falzen (41) der Flansche und den radial inneren. Rillen (43, 44) des Außenrings (26) ringförmige Kammern (45,46) umgrenzt werden, wobei diese Kammern elastische Dichtungen (28, 29) umschließen.

4. Untersetzungsgetriebe nach Anspruch 3,
**dadurch gekennzeichnet,**
**dass** jede der ringförmigen Kammern (45,46) ferner einen Pressschutzring (30, 31) umschließt, der dazu vorgesehen ist, das Herauspressen des Elastomers zu verhindern, wobei dieser Pressschutzring (30, 31) zwischen einer elastische Dichtung (28, 29) und der Vorderseite der radial inneren. Rille (43, 44) des Außenrings (26) angeordnet ist.

5. Untersetzungsgetriebe nach einem der Ansprüche 2 bis 4,
**dadurch gekennzeichnet,**
**dass** sich einer der Flansche (22) der Muffe (20) in Anlage an dem Teil befindet, an dem der Stift (15) befestigt ist, und der andere Flansch (23) durch eine Mutter (21), die mit einem Gewinde des Stifts (15) zusammenwirkt, gegen den Innenring (24) gedrückt wird.

6. Untersetzungsgetriebe nach einem der Ansprüche 1 bis 5,
**dadurch gekennzeichnet,**
**dass** der Stift (15) starr mit dem entsprechenden Arm (14) verbunden ist und im rechten Winkel zur Achse des Untersetzungsgetriebes angeordnet ist.

7. Untersetzungsgetriebe nach einem der Ansprüche ! 1 bis 5,
**dadurch gekennzeichnet,**
**dass** der Stift (15) am Ende des Arms (14) ausgebildet ist und parallel zur Achse des Untersetzungsgetriebes angeordnet ist.

8. Turbotriebwerk mit einem Verdichter, einer Gasturbine und einem Untersetzungsgetriebe zur Kraftübertragung zwischen dieser Gasturbine und diesem. Verdichter, dieses Untersetzungsgetriebe ein Zentralrad (2) enthält, das koaxial zur Achse dieses t Jntcrscizungsgetriebcs angeordnet ist und mit dieser Turbine ist, sowie einen PIanetenträger enthält, der koaxial zu diesem Zentralrad (2) mit einem ersten Element dieses Turbotriebwcrks verbunden ist und an dem eine Vielzahl von Planetenrädern (4) sitzen, die sich mit diesem Zentralrad (2) in Eingriff befinden, sowie einen Zahnkranz (3) enthält, der an einem zweiten Element dieses Turbotriebwerks befestigt ist und mit dem sich diese Planetenräder in Zahneingriff befinden, wobei eines von diesen ersten und zweiten Elementen einen festen Aufbau des Turbotriebwerks bildet und das andere von diesen Elementen den Verdichter in Drehbewegung versetzt, wobei dieser Planetenträger einerseits einen ringförmigen Käfig (8) mit einer Vielzahl von paarweise angeordneten Sitzen, um Lager (5) parallel zur Achse dieses Untersetzungsgetriebes zu halten, auf denen j jeweils eines dieser Planetenräder (4) dreht, sowie eine Vielzahl von axialen Aufnahmen (11), die jeweils zwischen zwei aneinandergrenzenden Planetenrädern (4a, 4b) angeordnet sind, und andererseits einen mit diesem ersten Element verbundenen ringförmigen Käfigträger (12) mit einer Vielzahl von axialen Armen (14) umfasst, wobei jeder Arm (14) in einer dieser Aufnahmen (11) angeordnet ist und an einem angrenzenden Abschnitt (9) dieses Käfigs (8) mittels eines Stifts (15) befestigt ist, der im Wesentlichen in der radialen Mittelebene dieses Käfigs angeordnet ist,
**dadurch gekennzeichnet,**
**dass** die Aufnahmen (11) der Arme (14) radial am Schnittpunkt der Kraftlinien der aneinandergrenzenden Planetenräder (4a, 4b) angeordnet sind, und dass jeder Stift (15) zur Befestigung eines Arms (14) an dem angrenzenden Abschnitt (9) des Käfigs (8) starr an einem der von diesem Arm (14) und diesem Käfigabschnitt (9) gebildeten Teile befestigt ist und an dem anderen Teil durch eine flexible Verbindung angebracht ist, welche eine Muffe (20) umfasst, die den Stift (15) umgibt und in einer Öffnung (17) des anderen Teils angeordnet ist, wobei diese Muffe (20) zwei ringförmige. Endflansche (22, 23) und mehrere zwischen diesen Flanschen angeordnete koaxiale Hülsen (24, 25, 26) enthält, wobei mindestens eine dieser Hülsen (25) aus einem Elastomer hergestellt ist, um die Flexibilität zu gewährleisten.

9. Turbotriebwerk nach Anspruch 8,
**dadurch gekennzeichnet,**
**dass** der Kranz (3) an dem festen Aufbau des Turbotriebwerks befestigt ist und der Käfigträger (12) den Verdichter in Drehbewegung versetzt.
